# EUROPÄISCHE PATENTSCHRIFT

(11) **EP 3 004 030 B1**
(45) Veröffentlichungstag und Bekanntmachung des Hinweises auf die Patenterteilung: **07.06.2017**
(21) Anmeldenummer: 14726502.9
(22) Anmeldetag: 24.04.2014
(51) Int. Cl.: C05F 9/02, C05F 17/02

(54) **VORRICHTUNG ZUM ERZEUGEN VON HUMUS**
DEVICE FOR PRODUCING HUMUS
DISPOSITIF DE PRODUCTION D'HUMUS

(30) Priorität: 28.05.2013 AT 503612013
(43) Veröffentlichungstag der Anmeldung: 13.04.2016
(73) Patentinhaber: Hageneder, Willibald, 4643 Pettenbach (AT)
(72) Erfinder: Hageneder, Willibald, 4643 Pettenbach (AT)
(74) Vertreter: Patentanwaltskanzlei Hübscher
(86) Internationale Anmeldenummer: PCT/AT2014/050103
(87) Internationale Veröffentlichungsnummer: WO 2014/190364

(56) Entgegenhaltungen:
- EP-A1- 0 501 028
- WO-A1-93/04999
- DE-A1- 3 225 335
- DE-A1- 4 008 104
- GB-A- 2 440 527
- US-A- 5 432 088
- Anonymous: "KOMPOST natürlich gut! CTWFW deutsches Prospekt Web 2012", CONTAINER TRADING WFW GmbH , November 2012 (2012-11), XP002729611, Gefunden im Internet: URL:http://site.ctwfw.com/includes/file/Sa veFile.php?coFileId=42 [gefunden am 2014-09-11]
- Anonymous: "Montage Anleitung Thermo-Komposter KOMP 525 und KOMP 700", CONTAINER TRADING WFW GmbH , 2012, XP055139664, Gefunden im Internet: URL:http://www.ctwfw.com/ws/FileHandling.p hp?d=1410438869&daId=566&file=1 [gefunden am 2014-09-11]
- Anonymous: "Montage Anleitung Thermo-Komposter KOMP 340 und KOMP 450", CONTAINER TRADING WFW GmbH , 2012, XP055139666, Gefunden im Internet: URL:http://www.ctwfw.com/ws/FileHandling.p hp?d=1410438998&daId=644&file=1 [gefunden am 2014-09-11]

## Beschreibung

### Technisches Gebiet

Die Erfindung betrifft eine Vorrichtung zum Erzeugen von Humus, insbesondere Komposter, mit einem einen Mantel ausbildenden Kompostbehälter, der nach oben hin mit einem Deckel abgeschlossen ist, wobei der Deckel ein Regenwassersammelbecken ausbildet, dem wenigstens ein in den Komposterinnenraum mündender Ablauf zugeordnet ist, der in einen dem Mantel zugeordneten Sammelbehälter (6) ausmündet.

### Stand der Technik

Derartige Vorrichtungen sind aus der EP 0 501 028 A1, der DE 4008104 A1 und der US 5 432 088 A bekannt. Gemäß der Lehre der EP 0 501 028 A1 und der DE 4008104 A1 wird lediglich die im Komposter zirkulierende Luft befeuchtet. Ein Bauelementsatz für einen derartigen Komposter ist beispielsweise aus der AT 402 752 B bekannt. Dieser Bauelementsatz umfasst Paneele, die eine rechteckige, insbesondere quadratische Grundform aufweisen und mit über Verbindungselemente an ihre Ränder anschließbaren weiteren Elementen zu größeren Einheiten verbindbar sind, wobei wenigstens paarweise gegenüberliegende Randseiten der Paneele mit gegengleichen Halterungen für die Verbindungselemente versehen sind. Jedes Paneel weist an zwei gegenüberliegenden Seiten gegeneinander versetzt abstandsweise parallel zum Seitenrand angeordnete, einteilig angeformte Hülsenabschnitte auf, die beim Anschluss eines Folgepaneels in Fluchtstellung zwischen die Hülsenabschnitte an der angrenzenden Seite dieses Paneels einragend wenigstens über je zwei Hülsenabschnitte durchgehende Verbindungsbolzen oder Rohre aufnehmen, wobei die beiden anderen Paneelränder mit aufeinandersetzbaren Stützflanschen versehen sind und die Paneele mit den Hülsenabschnitten und Flanschen einteilig aus Kunststoffmaterial, insbesondere aus wiederaufbereitetem und aufgeschäumtem Polyethylenaltmaterial, hergestellt sind. Mit derartigen Wandelementen lassen sich beliebige Komposterquerschnitte nachbilden, insbesondere dreieckige, quadratische, fünfeckige, sechseckige u. dgl. mehr. Dazu ist es auch bekannt, diese Komposter nach oben mit einem Deckel abzuschließen, um insbesondere eine Geruchsbelästigung zu vermeiden und um Feuchtigkeit im Komposter zu halten. Ein wesentlicher Nachteil derartige Komposter liegt insbesondere darin, dass das Klima im Komposter von außen praktisch nicht beeinflusst werden kann. Insbesondere ein Austrocknen des Kompostes soll aber vermieden werden, um eine möglichst schnelle Verrottung der zu kompostierenden Materialien zu gewährleisten. Zudem ist es von Nachteil, dass es noch keine zufriedenstellenden Sturmsicherungen gibt, welche den Deckel im Sturmfall gesichert auf dem Kompostbehälter halten und somit eine Beschädigung bzw. einen Verlust des Deckels vermeiden.

Die GB 2 440 527 A offenbart eine Möglichkeit zum Einbringen von Wasser in einen Komposter mit einer Art Gießkanne in Abhängigkeit der im Komposter vorherrschenden Feuchtigkeit. Und die DE 32 25 335 A1 zeigt einen Komposterdeckel, der als Sammelbecken für Wasser ausgebildet ist, das über Durchbrechungen im Deckel an das Rottgut abgegeben wird.

### Darstellung der Erfindung

Ausgehend von einem Stand der Technik der vorgeschilderten Art liegt der Erfindung die Aufgabe zugrunde, eine Vorrichtung zum Erzeugen von Humus zu schaffen, die ein verbessertes Verrottungsklima im Komposter bereitstellt und die vorzugsweise eine vorteilhafte Sicherung des Deckels erlaubt.

Die Erfindung löst die gestellte Aufgabe dadurch, dass der Ablauf in eine dem Mantel zugeordnete, um den Mantel im Bereich der Komposteröffnung horizontal umlaufende Verteilerrinne und/oder Ringleitung ausmündet, welche Verteilerrinne und/oder Ringleitung vorzugsweise an der Komposteröffnung eingehängt ist.

Über diesen Ablauf kann beispielsweise aufgesammeltes Regenwasser dem Rottgut in weitere Folge dosiert zugesetzt werden, womit auch über längere Zeiträume ein günstiges Verrottungsklima im Kompostbehälter aufrecht erhalten werden kann. Dieser Ablauf ist dabei gegebenenfalls hinsichtlich der einzubringenden Menge dosierbar. Insbesondere wird sich aber eine tröpfchenweise Dosierung empfehlen, um den gewünschten Effekt über möglichst große Zeiträume bereitstellen zu können.

Mit der Erfindung ergeben sich besonders vorteilhafte Konstruktionsverhältnisse und Platzverhältnisse für diese Feuchtigkeitsdosierungen im Kompostbehälter. Die Verteilerrinne bzw. Ringleitung ist wahlweise am Mantel des Kompostbehälters befestigt oder kann der Komposteröffnung eingehängt sein. Ist die Ringleitung eingehängt, hätte dies den Vorteil, dass sie jederzeit zu Reinigungszwecken problemlos abgenommen werden kann. Der Sammelbehälterboden mündet in die horizontal umlaufende Verteilerrinne und/oder Ringleitung aus bzw. ist gegebenenfalls auch ein Teil dieser. Dies bedeutet, dass der Sammelbehälter gegebenenfalls auch ringförmig um die Behälteröffnung umlaufen kann und gegebenenfalls mit Ablauföffnungen versehen ist, welche direkt ins Komposterinnere ausmünden. Oder aber der Sammelbehälter beschickt die umlaufende Verteilerrinne oder Ringleitung, von der aus das Wasser über den Komposterumfang möglichst gleichmäßig verteilt dem Rottgut zugeleitet wird.

Zur Steigerung des Fassungsvermögens des Regenwassersammelbeckens bzw. um einen Windaustrag des Wassers zu vermeiden, mündet der Ablauf in einen dem Mantel zugehaltenen Sammelbehälter aus. Dies bedeutet im Wesentlichen, dass das Regenwassersammelbecken das aufgesammelte Regenwasser unmittelbar an den dem Mantel zugeordneten Sammelbehälter weiterleitet und dort zwischenspeichert. Zur Vermeidung von Schmutzeintrag in den Sammelbehälter ist der Ablauf vorzugsweise mit einem Sieb ausgestattet. Ebenso kann der Sammelbehältereinlass mit einem Sieb ausgestattet sein, um auch bei geöffnetem Deckel und bei Beschickung des Kompostbehälters einen Schmutzeintrag in den Sammelbehälter durch Kompostgut zu vermeiden.

Dazu weist die horizontal umlaufende Verteilerrinne und/oder Ringleitung Wasserablauföffungen auf, insbesondere Wasserabtropföffungen auf, welche das Wasser dosiert abgeben. Zudem kann ein Wasserüberlauf vorgesehen sein, der überschüssiges Wasser aus dem Kompostbehälter leitet, um einen übermäßigen Eintrag in den Komposter zu vermeiden, was dem Verrottungsprozess wiederum abträglich wäre. Auch kann die horizontal umlaufende Verteilerrinne und/oder Ringleitung mit mindestens einem wasserspeichernden Behältnis verbunden sein und in dieses ausmünden, welche Verteilerrinne und/oder Ringleitung vorzugsweise am Mantel befestigt oder an der Kompostöffnung eingehängt ist. Der Boden der wasserspeichernden Behältnisse kann Wasserabtropföffungen aufweisen und/oder in eine horizontal umlaufende Verteilerrinne und/oder Ringleitung ausmünden.

Besonders gute Verteiler- bzw. Einbringverhältnisse ergeben sich, wenn den Wasserablauföffnungen, insbesondere den Wasserabtropföffnungen, ein wasserverteilendes bzw. wasserzwischenspeicherndes Faservlies zugeordnet ist. Dieses Faservlies verteilt das einzudringende Wasser möglichst gleichmäßig über eine große Fläche und sorgt somit für eine Gleichverteilung im Eintrag bzw. bildet es eine vergrößerte Verdunstungsfläche. Eine besonders feine Dosierung des Wassereintrages ist somit möglich.

In diesem Zusammenhang empfiehlt es sich, wenn der Mantel aus mehreren zum Komposter zusammensetzbaren Segmenten besteht, welche innenseitig mit eine geschlossene Struktur bildenden Aussteifungsrippen ausgestattet sind, wobei die Aussteifungsrippen dachartig angeordnet und die Segmentwände mit Durchbrechungen, nämlich mit Belüftungslöchern, ausgestattet sind. Damit ergibt sich eine besonders steife Struktur für die Komposterwand, insbesondere für den Kompostermantel und zudem eine ausreichende Durchlüftung, die zusätzlich zum Wassereintrag für ein ordnungsgemäßes Verrottungsklima erforderlich sind, gegeben. Dabei sind die Durchbrechungen, also die Durchlüftungslöcher, vorzugsweise so angeordnet, dass sie jeweils unmittelbar unterhalb der Versteifungsrippen positioniert sind. Dies hat den Vorteil, dass sie vom Verrottungsgut praktisch nicht verlegt werden können.

Besonders gute Durchlüftungsverhältnisse ergeben sich dabei im Zusammenhang mit einem wasserverteilenden bzw. wasserzwischenspeicherndes Faservlies, wenn dieses Faservlies dem Mantel innenseitig zugeordnet ist und den Mantel innenseitig zumindest teilweise bzw. teilflächig überdeckt. Damit ist sichergestellt, dass die Belüftungslöcher von dem an den Versteifungsrippen aufruhenden Faservlies derart überdeckt sind, dass eine praktisch vollflächige saubere Belüftung des Komposterinneren möglich wird, ohne eine Verstopfung bzw. ein Verlegen der Belüftungslöcher in Kauf nehmen zu müssen. Ein bestmögliches Hauptklima ist somit mit einfachen Mitteln erreichbar.

Zur Sicherung des Deckels ist es insbesondere vorgesehen, dass der Deckel mittels zweier benachbarter Wandelementverbindungsbolzen, über jeweils ein Scharnierauge als Abschluss nach oben hin aus den verbindenden Sicherungsdornen zweier benachbarter Wandsegmente gelenkig festgelegt ist und insbesondere wenigstens einer der anderen Eckbereiche des Deckels am Mantel lösbar festgelegt ist. Ist der Deckel zweigeteilt, wobei die beiden Teile vorzugsweise über ein Scharnier miteinander gelenkig verbunden sind und wobei beide Teile am Mantel festlegbar sind, ist insbesondere wenigstens einer der beiden Teile am Mantel lösbar festgelegt, der in weiter Folge zur Beschickung des Kompostbehälters öffenbar sein soll.

Um die Sicherung des Deckels möglichst einfach zu gestalten und auch leicht lösen zu können, empfiehlt es sich, dass der Deckel zum Festlegen am Mantel mit am Deckelrand verteilt angeordneten Durchbrechungen ausgestattet ist, von welchen Durchbrechungen wenigstens die dem lösbaren Teil zugeordneten Durchbrechungen zum Deckelumfang hin offen sind. Die zum Deckelumfang hin offenen Durchbrechungen können im Übergangsbereich gegenüber dem Durchbrechungsdurchmesser eingeschnürt sein, um ein ungewolltes Lösung der Sicherung zu vermeiden.

Zur Sicherung ist der Deckel mittels wenigstens eines in eine Mantelöffnung eingreifenden und dabei gegebenenfalls zwei benachbarte Wandsegmente verbindenden Sicherungsdorn am Mantel lösbar festgelegt. Der Sicherungsdorn weist eine die Einschnürung überwindende Geometrie und/oder eine der Einschnürungsweite entsprechende lichte Weite wenigstens an einem Sicherungsdornabschnitt auf. Dieser Sicherungsdornabschnitt ist vorzugsweise mit Abstand zum deckelseitigen Dornende angeordnet, um eine ordnungsgemäße Sicherung des geschlossenen Deckels zu gewährleisten.

Um einen derartigen Sicherungsdorn, von teilweise erheblicher Länge nicht im Stranggussverfahren herstellen zu müssen, sondern ihn auch im Druckgussverfahren in kleinen Formen herstellen zu können, wird vorgeschlagen, dass der Deckel mittels wenigstens eines in eine Mantelöffnung eingreifenden und dabei gegebenenfalls zwei benachbarte Wandsegmente verbindenden Sicherungsdorn am Mantel lösbar festgelegt ist, der in seiner Längserstreckung wenigstens zwei Abschnitte mit kreuzförmigem Querschitt umfasst, die je über einen Abschnitt mit bandförmigem Querschitt verbunden sind, welcher bandförmige Abschnitt die Funktion eines Federscharniers übernimmt. Die kreuzförmigen Abschnitte sorgen für einen sicheren Halt.

### Kurze Beschreibung der Zeichnung

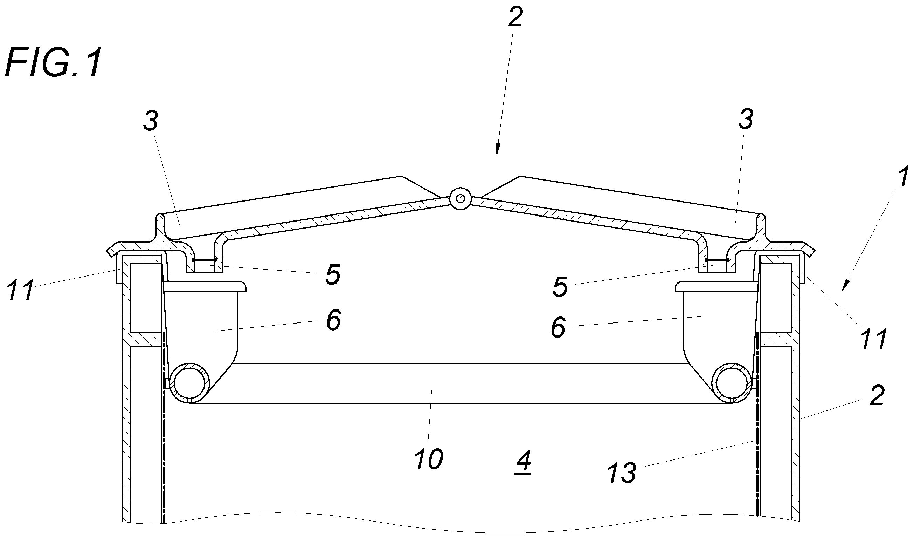

In der Zeichnung ist die Erfindung an Hand eines Ausführungsbeispiels schematisch dargestellt. Es zeigen
- Fig. 1: ein Ausschnitt einer erfindungsgemäßen Vorrichtung im teilgeschnittenen Querschnitt,

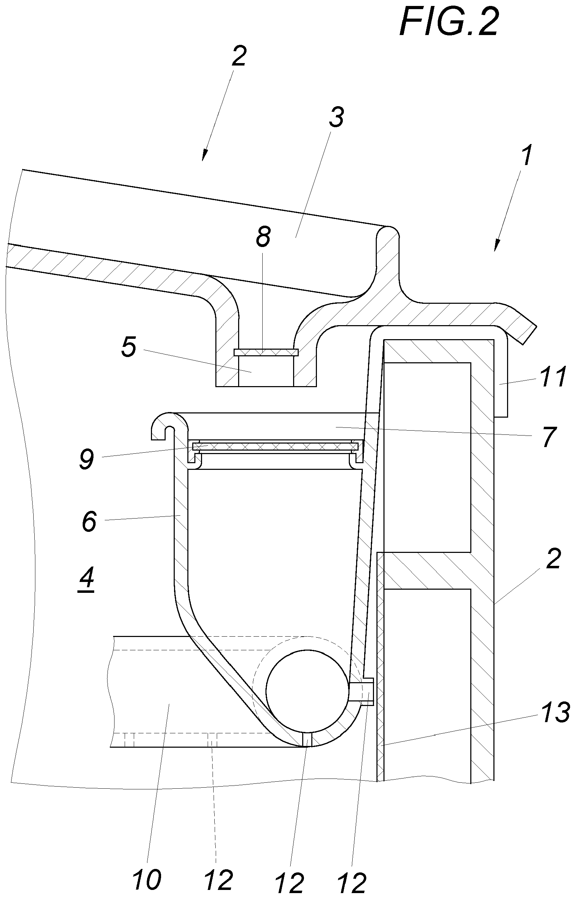

- Fig. 2: einen Ausschnitt der Vorrichtung aus Fig. 1 in größerer Darstellung,
- Fig. 3: ein Wandsegment einer erfindungsgemäßen Vorrichtung in Innenansicht,
- Fig. 4 - 6: verschiedene Deckelvarianten,
- Fig. 7: einen Sicherungsdorn,
- Fig. 7a: eine Variante des Sicherungsdorns aus Fig. 7,
- Fig. 8: einen in eine Durchbrechung am Deckel eingreifenden Sicherungsdorn,
- Fig. 8a: eine der Fig. 7a zugeordnete Variante der Fig. 8,
- Fig. 9: eine Konstruktionsvariante eines Sicherungsdornes,
- Fig. 10: einen in eine Deckeldurchbrechung eingreifenden Sicherungsdorn aus Fig. 9,
- Fig. 11: eine Konstruktionsvariante eines erfindungsgemäßen Sicherungsdornes,
- Fig. 12 und 13: den Sicherungsdorn aus Fig. 11 in eine Deckeldurchbrechung eingesetzt und
- Fig. 14 und 15: einen Sicherungsdorn mit einem Klemmfederansatz in Ansicht und im Querschnitt, und

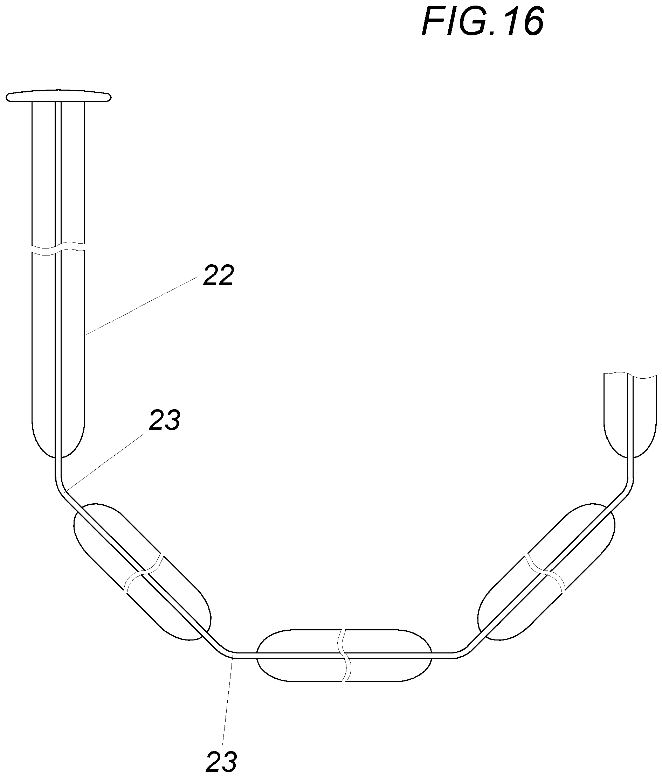

- Fig. 16: eine weitere Variante eines erfindungsgemäßen Sicherungsdorns.

### Weg zur Ausführung der Erfindung

Eine Vorrichtung zum Erzeugen von Humus, nämlich ein Komposter, umfasst u. a. einen einen Mantel ausbildenden Kompostbehälter 1, der aus mehreren verteilt über den Umfang angeordneten Segmenten zusammengesetzt ist und der mit einem den Kompostbehälter 1 nach oben hin abschließenden Deckel 2 ausgestattet ist. Der Deckel 2 bildet ein Regenwassersammelbecken 3, aus dem wenigstens ein in den Komposterinnenraum 4 mündender Ablauf 5 zugeordnet ist. Der Ablauf 5 mündet in einen dem Mantel 2 zugeordneten Sammelbehälter 6 aus. Sowohl der Ablauf 5 als auch der Sammelbehältereinlass 7 sind mit je einem Sieb 8, 9 ausgestattet.

Der Ablauf 5 mündet in eine um den Mantel 2 im Bereich der Komposteröffnung umlaufende Ringleitung 10 aus, welche Ringleitung im dargestellten Ausführungsbeispiel mittels die Komposteröffnung umgreifender Halteansätze 11 an der Komposteröffnung eingehängt ist. Die Sammelbehälterböden sind im Ausführungsbeispiel Teil der um den Mantel umlaufenden Ringleitung 10. Diese Ringleitung 10 weist über den Umfang gleich verteilte Wasserabtropföffnungen 12 auf. Den Wasserabtropföffnungen, insbesondere den Wasserablauföffnungen, ist vorzugsweise ein wasserverteilendes bzw. wasserzwischenspeicherndes Faservlies 13 zugeordnet, welches gegebenenfalls unmittelbar von einer Abtropföffnung bzw. Ablauföffnung 12 benetzt wird.

Der Mantel besteht, wie bereits erwähnt, aus mehreren zum Mantel zusammensetzbaren Segmenten 14, welche innenseitig mit einer geschlossenen Struktur ausbildenden Aussteifungsrippen 15 ausgestattet sind, wobei die Aussteifungsrippen dachartig angeordnet sind und die Segmentwände mit Durchbrechungen, nämlich mit Belüftungslöchern 16, ausgestattet sind. Eben diesem Mantel ist innenseitig das wasserverteilende und wasserzwischenspeichernde Faservlies 13 derart zugeordnet, dass es den Mantel innenseitig zumindest teilflächig überdeckt. Das Flies wird dabei von den Versteifungsrippen 15 mit Abstand zu den Belüftungslöchern 16 gehalten.

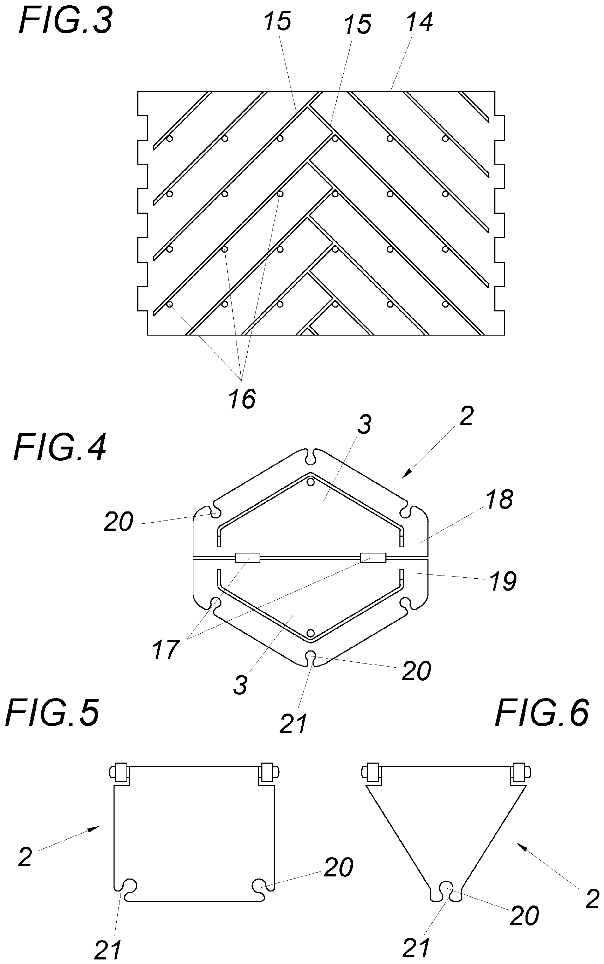

Fig. 4 bis 6 zeigen verschiedene Deckelvarianten. Der Deckel 2 nach Fig. 4 ist zweigeteilt ausgebildet, wobei die beiden Teile über ein Scharnier 17 miteinander gelenkig verbunden sind und wobei beide Teile 18, 19 im Mantel festlegbar sind und insbesondere wenigstens einer der beiden Teile am Mantel lösbar festgelegt ist. Dazu weist der Deckel 2 am Deckelrand Durchbrechungen 20 auf, von welchen Durchbrechungen 20 wenigstens jedem lösbaren Teil zugeordneten Durchbrechungen 20 zum Deckelumfang hin offen sind. Eben die zum Deckelumfang hin offenen Durchbrechungen sind im Übergangsbereich gegenüber dem Durchbrechungsdurchmesser eingeschnürt (Einschnürung 21).

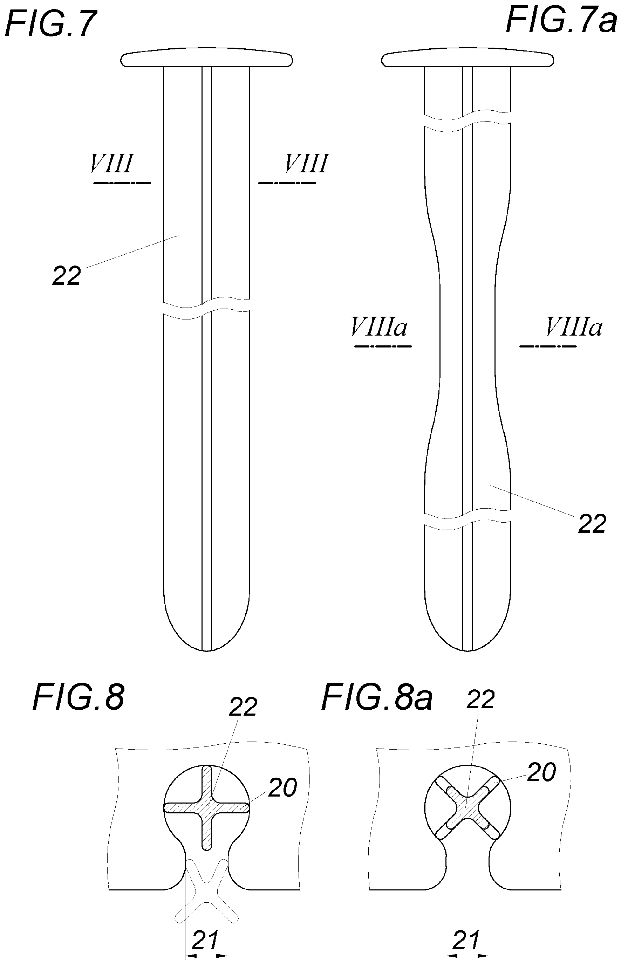

Fig. 7 zeigt einen Sicherungsdorn, wie er zum Verbinden der Wandsegmente 14 und zur Sicherung des Deckels 2 verwendet werden kann. Der Sicherungsdorn ist in Fig. 8 in die Durchbrechung 20 eingesetzt. Er kann die Einschnürung durch Verformung des Sicherungsdorns 22 mit kreuzförmigem Querschnitt, nachdem er etwas von der Deckeloberseite abgezogen wurde, überwinden.

Um die Durchbrechung dabei leichter durchsetzen zu können, kann der Sicherungsdorn 22 wie in Fig. 7a gezeigt ausgebildet sein.

In Fig. 8 ist angedeutet, dass der kreuzförmige Sicherungsdorn 22 beim Einschieben in die ihm zugeordneten Führungen im Mantel um 45° gedreht werden kann. Wird der Sicherungsdorn 22 nach einem Überwinden der Einschnürung 21 beim Niederdrücken zur Festlegung des Deckels 2 um 45° gedreht, erhöht sich dadurch der Stabquerschnitt um den Faktor Wurzel 2 gegenüber der Einschnürung 21, wodurch ein ungewolltes Öffnen bei starkem Wind verhindert wird. In Fig. 8a ist dargestellt, wie ein etwas von der Deckeloberseite abgezogener Sicherungsdorn 22, wie er in Fig. 7a dargestellt ist, in die Durchbrechung 20 einsetzbar ist. Wegen des eingeschnürten Sicherungdorns 22 ist dabei keine Verdrehung des Sicherungsdorns 22 erforderlich.

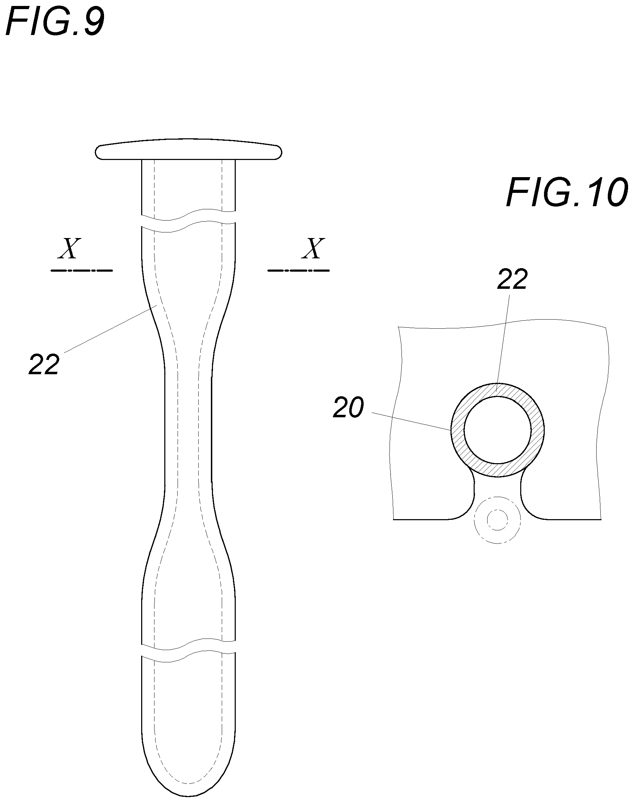

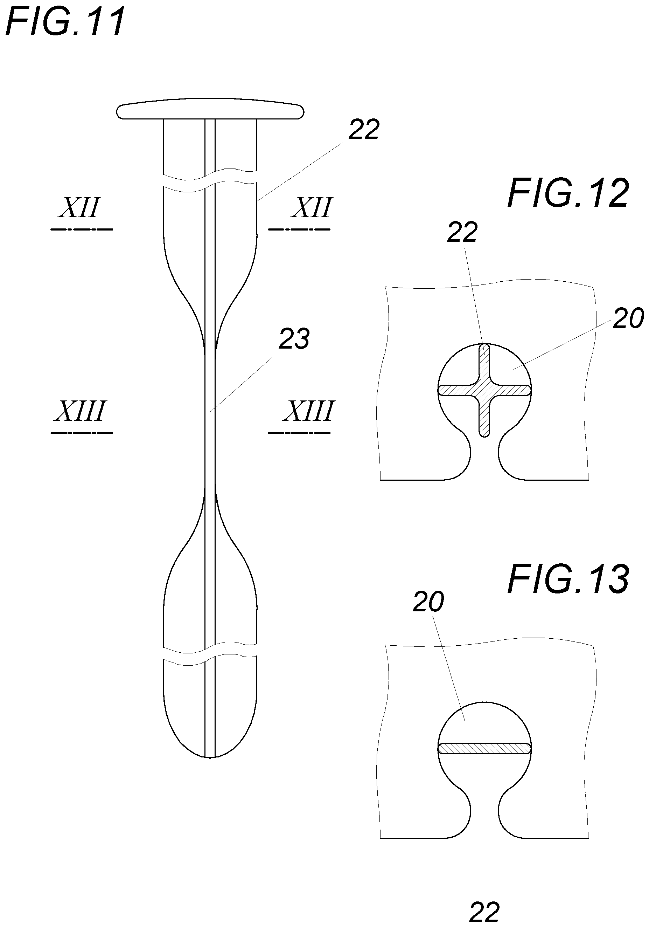

Der Deckel 2 kann aber auch mittels wenigstens eines in eine Wandmantelöffnung eingreifenden und dabei gegebenenfalls zwei benachbarte Wandsegmente verbindenden Sicherungsdorn 22 am Mantel lösbar festgelegt sein, der eine der Einschnürungsweite entsprechende lichte Weite wenigstens an einem Sicherungsdornabschnitt aufweist (Fig. 9 bis 13). Der Sicherungsdorn nach dem Ausführungsbeispiel nach Fig. 11 bis 13 ist zudem derart ausgebildet, dass er in seiner Längserstreckung zwei Abschnitte mit kreuzförmigem Querschnitt umfasst, die über einen Abschnitt mit bandförmigem Querschnitt 23 verbunden sind, welcher bandförmige Abschnitt 23 die Funktion eines Filmscharniers übernimmt.

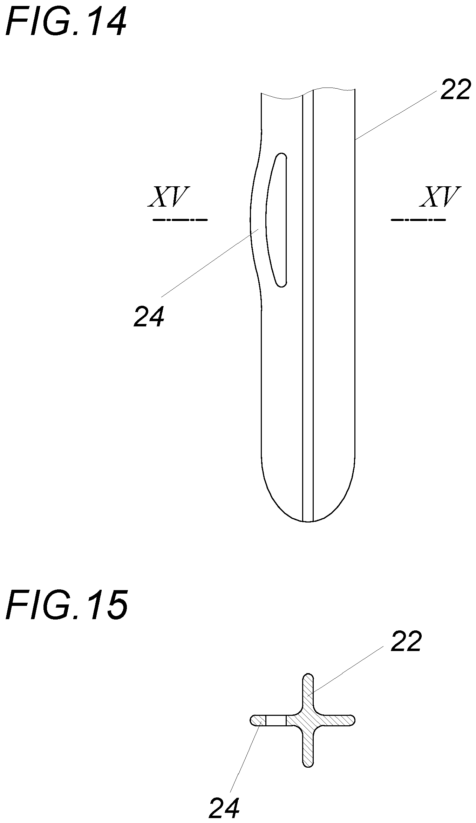

Im Ausführungsbeispiel nach Fig. 14 und 15 ist eine federnde Ausbauchung und eine Durchbrechung in einem Abschnitt eines Sicherungsdorns 22 dargestellt, welche Ausbauchung ein Federelement 24 bildet, das den Dorn zusätzlich in einem jeweiligen Segment 14 sichert.

## Patentansprüche

1. Vorrichtung zum Erzeugen von Humus, insbesondere Komposter, mit einem einen Mantel ausbildenden Kompostbehälter (1), der nach oben hin mit einem Deckel (2) abgeschlossen ist, wobei der Deckel (2) ein Regenwassersammelbecken (3) ausbildet, dem wenigstens ein in den Komposterinnenraum (4) mündender Ablauf (5) zugeordnet ist, der in einen dem Mantel zugeordneten Sammelbehälter (6) ausmündet, **dadurch gekennzeichnet, dass** der Ablauf (5) in eine dem Mantel zugeordnete, um den Mantel im Bereich der Komposteröffnung horizontal umlaufende Verteilerrinne und/oder Ringleitung (10) ausmündet, welche Verteilerrinne und/oder Ringleitung (10) vorzugsweise an der Komposteröffnung eingehängt ist.

2. Vorrichtung nach Anspruch 1, **dadurch gekennzeichnet, dass** der Ablauf (5) mit einem Sieb (8) ausgestattet ist.

3. Vorrichtung nach Anspruch 1 oder 2, **dadurch gekennzeichnet, dass** der Sammelbehältereinlass (7) mit einem Sieb (9) ausgestattet ist.

4. Vorrichtung nach einem der Ansprüche 1 bis 3, **dadurch gekennzeichnet, dass** der Sammelbehälterboden in die horizontal umlaufende Verteilerrinne und/oder Ringleitung (10) ausmündet und gegebenenfalls ein Teil dieser ist.

5. Vorrichtung nach einem der Ansprüche 1 bis 4, **dadurch gekennzeichnet, dass** die horizontal umlaufende Verteilerrinne und/oder Ringleitung (10) Wasserablauföffungen, insbesondere Wasserabtropföffungen (12) und gegebenenfalls Wasserüberlauföffnungen aufweist.

6. Vorrichtung nach Anspruch 5, **dadurch gekennzeichnet, dass** den Wasserablauföffungen, insbesondere den Wasserabtropföffungen (12), ein wasserverteilendes und wasserzwischenspeicherndes Faservlies (13) zugeordnet ist.

7. Vorrichtung nach einem der Ansprüche 1 bis 6, **dadurch gekennzeichnet, dass** der Mantel aus mehreren zum Mantel zusammensetzbaren Segmenten (14) besteht, welche innenseitig mit eine geschlossenen Struktur bildenden Aussteifungsrippen (15) ausgestattet sind, wobei die Aussteifungsrippen (15) dachartig angeordnet sind und die Segmentwände mit Durchbrechungen, nämlich Belüftungslöchern (16), ausgestattet sind.

8. Vorrichtung nach einem der Ansprüche 1 bis 7, **dadurch gekennzeichnet, dass** dem Mantel innenseitig ein wasserverteilendes und wasserzwischenspeicherndes Faservlies (13) zugeordnet ist, welches den Mantel innenseitig zumindest teilflächig überdeckt.

9. Vorrichtung nach einem der Ansprüche 1 bis 8, **dadurch gekennzeichnet, dass** der Deckel (2) zweigeteilt ist, wobei beide Teile (18, 19) über ein Scharnier (17) miteinander gelenkig verbunden sind und wobei beide Teile (18, 19) am Mantel festlegbar sind und insbesondere wenigstens einer der beiden Teile am Mantel lösbar festgelegt ist.

10. Vorrichtung nach Anspruch 9, **dadurch gekennzeichnet, dass** der Deckel (2) zum Festlegen am Mantel mit am Deckelrand verteilt angeordneten Durchbrechungen (20) ausgestattet ist, von welchen Durchbrechungen (20) wenigstens die dem lösbaren Teil zugeordneten Durchbrechungen (20) zum Deckelumfang hin offen sind.

11. Vorrichtung nach Anspruch 10, **dadurch gekennzeichnet, dass** die zum Deckelumfang hin offenen Durchbrechungen (20) im Übergangsbereich gegenüber dem Durchbrechungsdurchmesser eingeschnürt sind.

12. Vorrichtung nach einem der Ansprüche 9 bis 11, **dadurch gekennzeichnet, dass** der Deckel (2) mittels wenigstens eines in eine Mantelöffnung eingreifenden und dabei gegebenenfalls zwei benachbarte Segmente (14) verbindenden Sicherungsdorn (22) am Mantel lösbar festgelegt ist, der eine die Einschnürung (21) überwindende Geometrie und/oder eine der Einschnürungsweite entsprechende lichte Weite wenigstens an einem Sicherungsdornabschnitt aufweist.

13. Vorrichtung nach einem der Ansprüche 9 bis 12, **dadurch gekennzeichnet, dass** der Deckel (2) mittels wenigstens eines in eine Mantelöffnung eingreifenden und dabei gegebenenfalls zwei benachbarte Segmente (14) verbindenden Sicherungsdorn (22) am Mantel lösbar festgelegt ist, der in seiner Längserstreckung wenigstens zwei Abschnitte mit Kreuzförmigem Querschnitt umfasst, die je über einen Abschnitt mit bandförmigem Querschnitt (23) verbunden sind, welcher bandförmige Querschnitt (23) die Funktion eines Federscharniers übernimmt.

## Claims

1. Device for producing humus, in particular a composter, having a compost container (1) which forms a casing and which is closed at the top with a cover (2), wherein the cover (2) forms a rainwater collecting basin (3), to which at least one drain (5) issuing into the composter interior (4) is allocated, the drain issuing into a collecting container (6) allocated to the casing, **characterised in that** the drain (5) issues into a distributor channel and/or ring line (10) which is allocated to the casing and horizontally surrounds the casing in the region of the composter opening, said distributor channel and/or ring line (10) preferably being suspended at the composter opening.

2. Device as claimed in claim 1, **characterised in that** the drain (5) is equipped with a screen (8).

3. Device as claimed in claim 1 or 2, **characterised in that** the collecting container inlet (7) is equipped with a screen (9).

4. Device as claimed in any one of claims 1 to 3, **characterised in that** the collecting container bottom issues into the horizontally surrounding distributor channel and/or ring line (10) and is optionally a part thereof.

5. Device as claimed in any one of claims 1 to 4, **characterised in that** the horizontally surrounding distributor channel and/or ring line (10) comprises water drainage openings, in particular water drip openings (12) and optionally water overflow openings.

6. Device as claimed in claim 5, **characterised in that** a non-woven fabric (13) for water-distribution and intermediate storage of water is allocated to the water drainage openings, in particular the water drip openings (12).

7. Device as claimed in any one of claims 1 to 6, **characterised in that** the casing consists of a plurality of segments (14) which can be fitted together to form the casing and which are equipped on the inside with stiffening ribs (15) forming a closed structure, wherein the stiffening ribs (15) are arranged in a roof-like manner and the segment walls are provided with orifices, specifically ventilation holes (16).

8. Device as claimed in any one of claims 1 to 7, **characterised in that** a non-woven fabric (13) for water-distribution and intermediate storage of water, which covers at least some of the surface of the casing on the inside, is allocated to the casing on the inside.

9. Device as claimed in any one of claims 1 to 8, **characterised in that** the cover (2) is in two parts, wherein the two parts (18, 19) are connected to one another in an articulated manner via a hinge (17) and wherein both parts (18, 19) can be fixed on the casing and in particular at least one of the two parts is releasably fixed on the casing.

10. Device as claimed in claim 9, **characterised in that**, for the purpose of fixing on the casing, the cover (2) is provided with orifices (20) disposed in a distributed manner on the cover edge, of which orifices (20) at least the orifices (20) allocated to the releasable part are open towards the periphery of the cover.

11. Device as claimed in claim 10, **characterised in that** the orifices (20) open towards the periphery of the cover are constricted in the transition region in relation to the orifice diameter.

12. Device as claimed in any one of claims 9 to 11, **characterised in that** the cover (2) is releasably fixed on the casing by means of at least one securing pin (22) which engages in a casing opening, and in so doing optionally connects two adjacent segments (14), and has a geometry overcoming the constriction (21) and/or has a clearance corresponding to the constriction width at least on one securing pin portion.

13. Device as claimed in any one of claims 9 to 12, **characterised in that** the cover (2) is releasably fixed on the casing by means of at least one securing pin (22) which engages in a casing opening, and in so doing optionally connects two adjacent segments (14), and comprises in its longitudinal extension at least two portions having a cross-shaped cross section which are each connected via a portion having strip-like cross-section (23), this strip-like cross-section (23) assuming the function of a spring hinge.

## Revendications

1. Dispositif de production d'humus, en particulier, composteur avec un conteneur de compost (1) formant une enveloppe, qui est fermée vers le haut par un couvercle (2), le couvercle (2) formant un bassin pour collecter les eaux de pluie (3) auquel est affectée au moins une conduite d'écoulement (5) débouchant dans l'espace intérieur du composteur (4), laquelle conduite débouche dans un conteneur collecteur (6) désigné sur l'enveloppe, **caractérisé en ce que** la conduite d'écoulement (5) débouche dans une conduite annulaire (10) et/ou goulotte de répartition entourant horizontalement l'ouverture du composteur dans la zone de l'enveloppe, laquelle conduite annulaire (10) et/ou goulotte de répartition est accrochée de préférence au niveau de l'ouverture du composteur.

2. Dispositif selon la revendication 1, **caractérisé en ce que** la conduite d'écoulement (5) est équipée d'un tamis (8).

3. Dispositif selon la revendication 1 ou 2, **caractérisé en ce que** l'entrée du conteneur collecteur (7) est équipée d'un tamis (9).

4. Dispositif selon l'une des revendications 1 à 3, **caractérisé en ce que** le fond du conteneur collecteur débouche dans la conduite annulaire (10) et/ou goulotte de répartition entourant horizontalement et est, le cas échéant, une partie de celle-ci.

5. Dispositif selon l'une des revendications 1 à 4, **caractérisé en ce que** la conduite annulaire (10) et/ou goulotte de répartition entourant horizontalement présente(nt) des ouvertures d'écoulement d'eau, en particulier des ouvertures d'égouttage d'eau (12) et le cas échéant, des ouvertures de trop-plein d'eau.

6. Dispositif selon la revendication 5, **caractérisé en ce qu'**une nappe de fibres (13) retenant l'eau et répartissant l'eau, est associée aux ouvertures d'écoulement d'eau, en particulier des ouvertures d'égouttage d'eau (12).

7. Dispositif selon l'une des revendications 1 à 6, **caractérisé en ce que** l'enveloppe est constituée de plusieurs segments (14) pouvant composer l'enveloppe, lesquels sont équipés côté intérieur de nervures de renforcement (15) formant une structure fermée, les nervures de renforcement (15) étant disposées à la manière d'un toit, et les parois de segment étant équipées de découpures, à savoir des trous d'aération (16).

8. Dispositif selon l'une des revendications 1 à 7, **caractérisé en ce que** côté intérieur, une nappe de fibres (13) retenant l'eau et répartissant l'eau, est associée à l'enveloppe, laquelle recouvre l'enveloppe côté intérieur au moins partiellement.

9. Dispositif selon l'une des revendications 1 à 8, **caractérisé en ce que** le couvercle (2) est en deux parties, les deux parties (18, 19) étant reliées ensemble de manière articulée par le biais d'une charnière (17), et les deux parties (18, 19) pouvant être fixées au niveau de l'enveloppe, et en particulier, au moins une des deux parties étant fixée de manière amovible au niveau de l'enveloppe.

10. Dispositif selon la revendication 9, **caractérisé en ce que** le couvercle (2) est équipé, pour fixation au niveau de l'enveloppe, de découpures (20) disposées de manière répartie au niveau du bord du couvercle, parmi lesquelles découpures (20), au moins les découpures (20) associées à la partie amovible sont ouvertes vers la périphérie du couvercle.

11. Dispositif selon la revendication 10, **caractérisé en ce que** les découpures (20) ouvertes vers la périphérie du couvercle sont rétrécies, dans la zone de transition, en regard du diamètre de la découpure.

12. Dispositif selon l'une des revendications 9 à 11, **caractérisé en ce que** le couvercle (2) est fixé de manière amovible au niveau de l'enveloppe au moyen d'au moins une broche de sécurité (22) venant en prise dans une ouverture de l'enveloppe, et à l'occasion, le cas échéant, reliant deux segments (14) adjacents, qui présente une géométrie surmontant le rétrécissement (21) et/ou une étendue libre correspondant à l'étendue du rétrécissement, au moins au niveau d'une section de la broche de sécurité.

13. Dispositif selon l'une des revendications 9 à 12, **caractérisé en ce que** le couvercle (2) est fixé de manière amovible au niveau de l'enveloppe au moyen d'au moins une broche de sécurité (22) venant en prise dans une ouverture de l'enveloppe et à l'occasion, le cas échéant, reliant deux segments (14) adjacents, qui comprend dans son extension longitudinale au moins deux sections avec une section transversale en forme de croix qui sont reliées respectivement par le biais d'une section, à la section transversale (23) en forme de bande, laquelle section transversale (23) en forme de bande prend en charge la fonction d'une charnière à ressort.
